# EUROPEAN PATENT SPECIFICATION

(11) **EP 2 242 648 B1**
(45) Date of publication and mention of the grant of the patent: **05.03.2014**
(21) Application number: 09705086.8
(22) Date of filing: 21.01.2009
(51) Int. Cl.: B32B 27/36, C08G 64/04

(54) **CYCLOALIPHATIC POLYESTER COPOLYMER ARTICLES AND METHODS FOR MAKING ARTICLES THEREFROM**
COPOLYMERARTIKEL AUS CYCLOALIPHATISCHEM POLYESTER UND VERFAHREN ZUR HERSTELLUNG VON ARTIKELN DARAUS
ARTICLES DE COPOLYMÈRE POLYESTER CYCLOALIPHATIQUE ET PROCÉDÉS DE FABRICATION D'ARTICLES À PARTIR DE CEUX-CI

(30) Priority: 28.01.2008 US 20683
(43) Date of publication of application: 27.10.2010
(73) Proprietor: SABIC Innovative Plastics IP B.V., 4612 PX Bergen op Zoom (NL)
(72) Inventor: TRIPATHI, Sandeep, Evansville Indiana 47712 (US); CHAKRAVARTI, Shrevas, Evansville Indiana 47712 (US)
(74) Representative: Carpintero Lopez, Francisco
(86) International application number: PCT/US2009/031569
(87) International publication number: WO 2009/097209

(56) References cited:
- EP-A- 0 374 656
- WO-A-00/61664
- WO-A-2004/033529
- WO-A-2007/040973

## Description

### BACKGROUND

In-mold decorated thermoplastic films are gaining wide acceptance in applications such as household consumer electronics, appliances, and printed overlays. These applications demand a combination of properties such as clarity, printability, thermoformability, and hardness, as well as scratch, chemical, and impact resistance. This combination is not attainable with many materials of choice. The most common solution has been to apply a functional coating as a cap layer on thermoplastic films, wherein the coating offers the surface properties while the base film provides the bulk mechanical integrity. However, while a coating improves scratch resistance, it takes away the films thermoformability, which seriously restricts the useful applications for such a film. One of the most difficult challenges is the balance between scratch resistance and thermoformability remains.

Therefore, remains a need in the art for multilayer sheets that can be easily formed, e.g., via coextrusion, and which provide the desired combination of properties, including thermoformability and scratch resistance.

### BRIEF SUMMARY

The present disclosure is generally directed to thermoformable materials, methods for making thermoformable sheets, and articles made therefrom. In one embodiment, the thermoformable sheet can comprise: a cap layer comprising a combination of a bisphenol cyclohexylidene polycarbonate and a cycloaliphatic polyester copolymer, and a base layer comprising polycarbonate.

In one embodiment, the sheet can comprise: a cap layer and a base layer comprising polycarbonate, wherein the sheet is thermoformable. The cap layer can comprise a combination of a bisphenol cyclohexylidene polycarbonate and a second polymer, where the second polymer comprises 1,1-bis(4-hydroxy-3-methylphenyl)cyclohexane and poly(1,4-cyclohexane-dimethanol-1,4-dicarboxylate).

In one embodiment, a method for making an article can comprise: melting a polycarbonate in an extruder, forming a molten combination of a bisphenol cyclohexylidene polycarbonate and a cycloaliphatic polyester copolymer, and coextruding the molten combination and the polycarbonate to form a sheet

The disclosure can be understood more readily by reference to the following detailed description of the various features of the disclosure and the examples included therein.

### BRIEF DESCRIPTION OF THE DRAWINGS

Refer now to the figure, which is merely illustrative, not limiting.
Figure 1 is a cross-sectional illustration of a scratch created by a profile load.
Figure 2 is a schematic of an exemplary co-extrusion system.

### DETAILED DESCRIPTION

Multilayer articles comprising a cap layer and a base layer. The base layer comprises polycarbonate, polyester, polycarbonate copolymers, or a combination comprising at least one of the foregoing. The cap layer comprises a combination of a bisphenol cyclohexylidene polycarbonate and a second polymer, where the second polymer is a cycloaliphatic polyester copolymer. The cap layer and base layer can be coextruded to form a multilayer sheet.

Hardness, scratch resistance, mechanical strength, and thermoformability of such articles should enable these articles to meet a desired combination of properties such as clarity, printability, thermoformability, and hardness, as well as scratch, chemical, and impact resistance. Additionally, the base layer adheres to the cap layer without the need for any adhesive or a tie layer, and provides a substantial rheology match between the cap layer and the base layer, thereby improving the processability of the composite film.

The present disclosure is generally directed to thermoformable materials, methods for making thermoformable sheets, and articles made therefrom. In one embodiment, the thermoformable sheet can comprise: a cap layer comprising a combination of a bisphenol cyclohexylidene polycarbonate and a cycloaliphatic polyester copolymer, and a base layer comprising polycarbonate. The amount of the second polymer can be 10 to 50 wt%, with the remainder being bisphenol cyclohexylidene polycarbonate. The cycloaliphatic polyester copolymers can comprise at least 50 mole % cycloaliphatic residues, the remainder being the aromatic acid or C₁₋₄ alkylene glycol residues, or, specifically, at least 70 mole % cycloaliphatic residues. The cycloaliphatic polyester copolymer can comprises 25 wt% to 100 wt% cycloaliphatic polyester, balance polycarbonate, or, specifically, 50 wt% to 90 wt% cycloaliphatic polyester. Furthermore, the sheet can comprise a pencil hardness of greater than or equal to HB. In addition to the pencil hardness of greater than or equal to HB, the sheet can comprise a tear initiation strength of greater than or equal to 120 N/mm, and/or a tear propagation strength of greater than or equal to 5 N/mm. The sheet can be one that passes a formability test and/or a trimming test, wherein the formability test comprises preheating to 140°C 12 inches x 12 inches specimens of the sheet and then vacuum forming the preheated sheet on a COMET Thermoformer with the male forming tool at 120°C, a minimum curvature of 5 mm, and maximum draw of 10 mm, to produce a formed part; and wherein the trimming test comprises trimming the formed part using matched metal dies comprising a hardened male die half and a hardened female die half, with a clearance between the male die half and female die half of 10% of sheet thickness; wherein the part is at a 90 degree angle to the blade at the time of impact. Combinations of the above properties and/or materials are also contemplated.

In one embodiment, the sheet can comprise: a cap layer and a base layer comprising polycarbonate, wherein the sheet is thermoformable. The cap layer can comprise a combination of a bisphenol cyclohexylidene polycarbonate and a second polymer, where the second polymer comprises 1,1-bis(4-hydroxy-3-methylphenyl)cyclohexane and poly(1,4-cyclohexane-dimethanol-1,4-dicarboxylate). The second polymer can comprise less than or equal to 90 wt% of a combination of 1,1-bis(4-hydroxy-3-methylphenyl)cyclohexane and polycarbonate, based upon a total weight of the second polymer, or specifically, 50 wt% to 90 wt% of the combination of 1,1-bis(4-hydroxy-3-methylphenyl)cyclohexane and polycarbonate.

In one embodiment, a method for making an article can comprise: melting a polycarbonate in an extruder, forming a molten combination of a bisphenol cyclohexylidene polycarbonate and a cycloaliphatic polyester copolymer, and coextruding the molten combination and the polycarbonate to form a sheet. Optionally, the sheet can be thermoformed.

The base layer comprises an aromatic polycarbonate comprising repeating structural units of the formula: 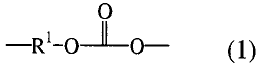 in which at least about 60 percent of the total number of R¹ groups contain aromatic moieties and the balance thereof are aliphatic, alicyclic, or aromatic. In an embodiment, each R¹ is a C₆₋₃₀ aromatic group, that is, contains at least one aromatic moiety. Specifically, each R¹ is derived from a bisphenol compound of the formula (2): 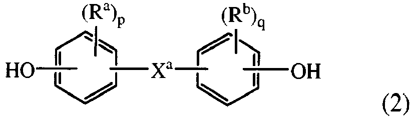 wherein R^{a} and R^{b} each represent a halogen or C₁₋₁₂ alkyl group and can be the same or different; and p and q are each independently integers of 0 to 4. It will be understood that R^{a} is hydrogen when p is 0, and likewise R^{b} is hydrogen when q is 0. Also in formula (2), X^{a} represents a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In one embodiment, p and q is each 1, and R³ and R^{b} are each a C₁₋₃ alkyl group, specifically methyl, disposed meta to the hydroxy group on each arylene group.

Some illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (2) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used.

In one specific embodiment, the polycarbonate is a linear homopolymer derived from bisphenol A, in which p and q is each 0 and each of Y¹ is isopropylidene in formula (2).

The cap layer comprises a combination of bisphenol cyclohexylidene polycarbonate(s), a second polymer, where the second polymer comprises a cycloaliphatic polyester copolymer, and optionally additional polymer(s). Examples of possible second polymers are set forth in commonly assigned US Patent Application No. 11/177,134 to Geert Boven et al. and U.S. Patent Application No. 11/560,642 to Chakravarti et al.

Bisphenol cyclohexylidene polycarbonates are of the formula (3): 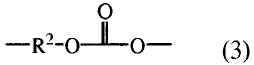 wherein at least a portion of the R² groups are derived from a cyclohexylidene bisphenol compound and the balance thereof are C₁₋₆₀ aliphatic, alicyclic, or aromatic radicals. In one embodiment, each R² is derived from a bisphenol compound of formula (3) wherein R^{a}, R^{b}, p, and q are as defined above, at least a portion of the X^{a} groups are cyclohexylidene, and the balance thereof are represented by groups of the formulas: 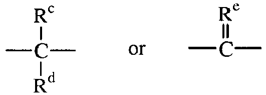 wherein R^{c} and R^{d} each independently represent a hydrogen atom or a monovalent linear or cyclic C₁₋₁₂ hydrocarbon group and R^{e} is a divalent hydrocarbon group.

Specifically, all or a portion of the R² groups are derived from a cyclohexylidene-bridged, alkyl-substituted bisphenol of formula (4) 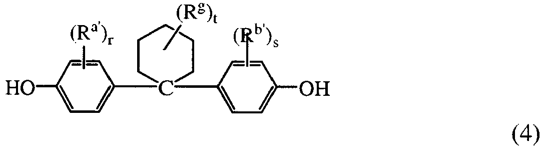 wherein R^{a'} and R^{b'} are each independently C₁₋₁₂ alkyl, R^{g} is C₁₋₁₂ alkyl or halogen, r and s are each independently 1 to 4, and t is 0 to 10. In a specific embodiment, at least one of each of R^{a'} and R^{b'} are disposed meta to the cyclohexylidene bridging group. The substituents R^{a'}, R^{b'}, and R^{g} can, when comprising an appropriate number of carbon atoms, be straight chain, cyclic, bicyclic, branched, saturated, or unsaturated. In an embodiment, R^{a'} and R^{b'} are each independently C₁₋₄ alkyl, R^{g} is C₁₋₄ alkyl, r and s are each 1, and t is 0 to 5. In another specific embodiment, R^{a'}, R^{b'} and R^{g} are each methyl, r and s are each 1, and t is 0 or 3. The cyclohexylidene-bridged bisphenol can be the reaction product of two moles of o-cresol with one mole of cyclohexanone. In another exemplary embodiment, the cyclohexylidene-bridged bisphenol is the reaction product of two moles of a cresol with one mole of a hydrogenated isophorone (e.g., 1,1,3-trimethyl-3-cyclohexane-5-one). A specific example of a cyclohexylidene bisphenol compound is 1,1-bis(4-hydroxy-3-methylphenyl)cyclohexane (DMBPC).

The bisphenol cyclohexylidene polycarbonates can be a homopolycarbonate (e.g., a DMBPC-containing homopolycarbonate) or a copolycarbonate wherein R² is derived from a cyclohexylidene-bridged bisphenol and another compound, e.g., 1,1-bis(4-hydroxyphenyl)methane, 1,1-bis(4-hydroxyphenyl)ethane, bisphenol A, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxy-t-butylphenyl)propane, 3,3-bis(4-hydroxyphenyl)phthalimidine, 2-phenyl-3,3-bis(4-hydroxyphenyl)phthalimidine (PPPBP), and combinations comprising at least one of the foregoing other compounds. In as specific embodiment, the bisphenol cyclohexylidene polycarbonate used in the cap layer comprises units derived from DMBPC and from bisphenol A.

In addition to the cyclohexylidene bisphenol copolycarbonate, the cap layer comprises a second polymer, where the second polymer can comprise a cycloaliphatic polyester copolymer. The cycloaliphatic polyesters can have the formula (5): 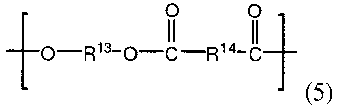 wherein R¹³ and R¹⁴ are independently at each occurrence an aryl, aliphatic or cycloalkane having 2 to 20 carbon atoms, with the proviso that at least one of R¹³ and R¹⁴ is a cycloaliphatic group. The cycloaliphatic polyester is a condensation product where R¹³ is the residue of a diol or a chemical equivalent thereof and R¹⁴ is residue of a diacid or a chemical equivalent thereof. In one embodiment, both R¹³ and R¹⁴ are cycloalkyl-containing groups.

In one embodiment R¹³ and R¹⁴ are cycloalkyl radicals independently selected from the following structural units:

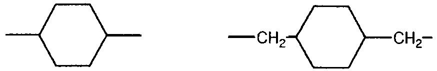

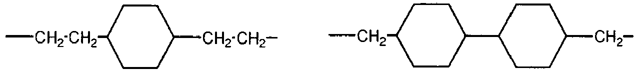

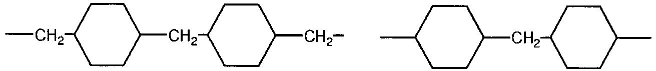

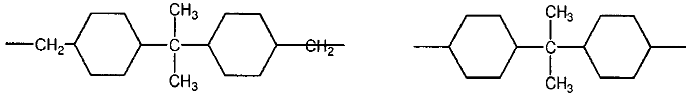

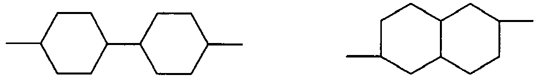

In a specific embodiment the diol is 1,4-cyclohexane dimethanol or a chemical equivalent thereof. Either or both of the cis or trans isomers of the 1,4-cyclohexane dimethanol can be used. Chemical equivalents to the diols include esters, such as C₁₋₄ dialkylesters, diaryl esters, and the like. Specific non-limiting examples of diacids include decahydro naphthalene dicarboxylic acids, norbornene dicarboxylic acids, bicyclo octane dicarboxylic acids, 1,4-cyclohexanedicarboxylic acid or the chemical equivalents thereof. Most specifically the diacids include trans-1,4-cyclohexanedicarboxylic acid or a chemical equivalent thereof. Chemical equivalents of these diacids include C₁₋₄ dialkyl esters, diaryl esters, anhydrides, salts, acid chlorides, acid bromides, and the like. In one embodiment the chemical equivalent comprises the dialkyl esters of the cycloaliphatic diacids, and most specifically the dimethyl ester of the acid, such as dimethyl-1,4-cyclohexane-dicarboxylate.

Other types of units can be present in the cycloaliphatic polyester copolymer, including units derived from the reaction of an aromatic carboxylic diacid component and a non-cycloaliphatic diol, or chemical equivalents thereof. Exemplary aromatic dicarboxylic acids include isophthalic acid, terephthalic acid, 1,2-di(p-carboxyphenyl)ethane, 4,4'-dicarboxydiphenyl ether, 4,4'-bisbenzoic acid, 1,4-, 1,5-, or 2,6-naphthalenedicarboxylic acids, and combinations comprising at least one of the foregoing acids. Specific dicarboxylic acids are terephthalic acid, isophthalic acid, and combinations comprising the two foregoing acids. The non-cycloaliphatic diol can be a C₁₋₄ alkylene glycol, for example ethylene glycol, propylene glycol, 1,4-butylene glycol, and the like, and combinations comprising at least one of the foregoing glycols.

The cycloaliphatic polyester copolymers more specifically comprise at least 50 mole % of the cycloaliphatic residues, more specifically at least 70 mole % of the cycloaliphatic residues, the remainder being the aromatic acid or C₁₋₄ alkylene glycol residues. A specific cycloaliphatic polyester is poly(cyclohexane-1,4-dimethylene cyclohexane-1,4-dicarboxylate), also referred to as poly(1,4-cyclohexane-dimethanol-1,4-dicarboxylate) (PCCD). Another specific ester is poly(1,4-cyclohexylene dimethylene co-ethylene terephthalate) (PCTG) wherein greater than 50 mol% of the ester groups are derived from 1,4-cyclohexanedimethanol; and poly(ethylene-co-1,4-cyclohexylenedimethylene terephthalate) wherein greater than 50 mol% of the ester groups are derived from ethylene (PETG). Also contemplated for use herein are any of the above polyesters with minor amounts, e.g., 0.5 to 5 weight percent (wt%), of units derived from aliphatic acid and/or aliphatic polyols to form copolyesters. The aliphatic polyols include glycols, such as poly(ethylene glycol) or poly(butylene glycol).

The relative amount of the bisphenol cyclohexylidene polycarbonate and the second polymer varies with the specific application. In one embodiment, the amount of the second polymer is 10 wt% to 50 wt%, or, specifically, 20 wt% to 40 wt%, with the remainder being bisphenol cyclohexylidene polycarbonate. The base layer composition is commercially available from GE Plastics as XYLEX®.

In addition to the above materials, the base layer and/or cap layer can, independently, include various additives, with the proviso that the additives are selected so as to not significantly adversely affect the desired properties of the layers, for example, thermoformability, scratch resistance, and so forth. Combinations of additive(s) can be used. Such additives can be mixed at a suitable time during the mixing of the components for forming the composition for each of the layers. Possible additive(s) include as anti-oxidants, flame retardants, drip retardants, dyes, pigments, colorants, stabilizers (e.g., thermal, ultraviolet, and so forth), small particle mineral (such as clay, mica, and/or talc), antistatic agents, plasticizers, lubricants, mold release agents, whitening agents, reinforcing fillers (e.g., glass), and combinations comprising at least one of the foregoing. The amount of additive(s) can be less than or equal to about 20 wt%, or, specifically, about 0.1 wt% to about 10 wt% additive(s), or, more specifically, about 0.25 wt% to about 5 wt% additive(s), based upon a total weight of the layer comprising the additive(s).

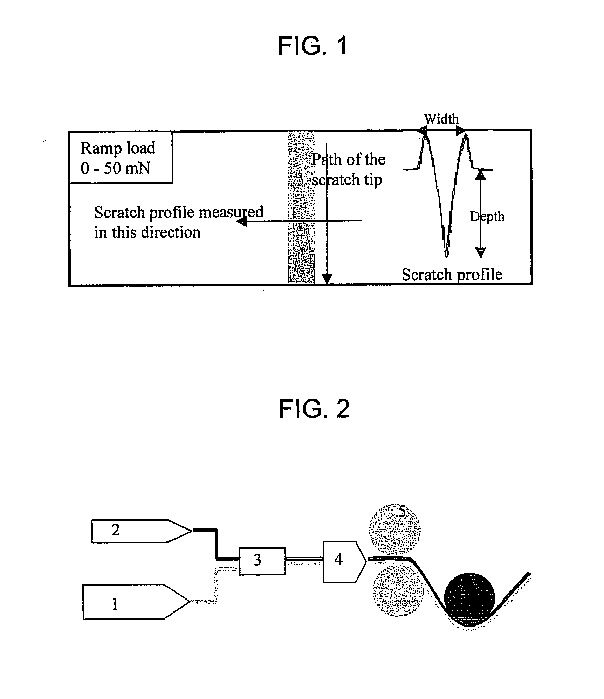

The present cap layer and base layer are formed by coextrusion. For example, the multi-layer composite can be suitably formed using a continuous calendaring co-extrusion process as shown schematically in Figure 2. In this process, single screw extruders 1 and 2 supply resin melts for the individual layers (i.e., the top layer, the second layer and any additional polymeric layers) into a feed block 3. A die 4 forms a molten polymeric web that is fed to a 3 roll-calendaring stack 5. Typically, the calendaring stack comprises 2 to 4 counter-rotating cylindrical rolls with each roll, individually, made from metal (e.g., steel) or rubber coated metal. Each roll can be heated or cooled, as is appropriate. The molten web formed by the die can be successively squeezed between the calendaring rolls. The inter-roll clearances or "nips" through which the web is drawn determines the thickness of the layers. The multi-layer composite may also be formed from separate pre-formed films corresponding to the polymeric layers which are subsequently laminated together, for example using heated rolls and optionally adhesive tie layers.

The layers can be coextruded to form various cap layer thickness percentage (i.e., cap layer thickness divided overall thickness). The cap layer thickness percentage can be 1% to 99%, or, specifically, 5% to 60%, or, more specifically, 10% to 30%. Generally, the overall thickness of the sheet can be up to and even exceeding several millimeters. More specifically, the sheet can have a thickness (e.g., gage) of 1 mil (25.4 micrometers (µm)) to 500 mils (12,700 µm), or, yet more specifically, about 5 mils (127 µm) to about 40 mils (1016 µm), and yet more specifically, about 7 mils (178 µm) to about 30 mils (762 µm).

The following examples are merely exemplary, not limiting.

### EXAMPLES

### Example 1

Bilayer films of varying cap layer compositions and film constructions (Samples 1 through 20 in Table 2) were prepared using the coextrusion method described in relation to Figure 2. The specific process parameters for each sample varied with individual layer thicknesses and the overall film thickness, the range of process parameters encompassing all samples in Table 2 is given in Table 3. It is understood that the process window for extruding these films is not restricted to that listed in Table 3. An objective of this experiment was to determine whether or not there exists "a" condition at which these coextruded films could be made, i.e. whether or not these films are extrudable. Table 3 merely provides one set of conditions for co-extruding these films.

This example demonstrates the suitability of the disclosed articles for in mold decoration (IMD) applications. Films for such applications should be amenable to the three sub-processes of IMD: (a) extrudability - ability to make films out of the selected materials, at a surface quality comparable to commercially available polished graphic films (e.g., Lexan 8010 film); (b) formability - ability to draw the films into different geometries; and (c) trimming - ability to cut the film cleanly without inducing any cracking or delamination.

Table 1 contains the chemical description and the source of the resins used in the film constructions set forth in Table 2.

| Table 1 | | |
|---|---|---|
| Component | Chemical Description | Source/Vendor |
| BPA-PC | Bisphenol A Polycarbonate resin (Mw¹ = 25,000 g/mol, PS standards²) | SABIC Innovative Plastics, Pittsfield, MA |
| DMBPC-PC | Dimethyl bisphenol cyclohexane polycarbonate | SABIC Innovative Plastics, Pittsfield, MA |
| PCCD | Poly(cyclohexane-1,4-dimethylene cyclohexane-1,4-dicarboxylate), also referred to as poly(1,4-cyclohexanedimethanol-1,4-dicarboxylate) | Eastman Chemical Kingsport, Tenn. |

| | | |
|---|---|---|
| ¹Mw = weight average molecular weight ²PS standards = as measured by gel permeation chromatography (GPC) | | |

Table 2 evaluates the samples along the above 3 attribute metrics: surface quality, thermoformability, and trimming. To measure surface quality, 10 pieces of size 12 inches x 12 inches (30.5 cm x 30.5 cm) were examined by 3 operators to identify any imperfection (lines, dents, bumps) of length scales greater than 2 mm. Absence, to the unaided eye, of any such imperfection was considered a "pass". It was not intended to test the optical quality of the films, but instead meant to identify any gross imperfections suggesting any issues with film co-extrusion.

To test the formability 12 inches x 12 inches specimens of the film were preheated to 140°C and then vacuum formed on a COMET Thermoformer, with the male forming tool at 120°C, a minimum curvature of 5 mm, and maximum draw of 10 mm. A "pass" on this test is absence of any wrinkle, whitening, or tear on the film during the process as determined with an unaided eye. (The unaided eye excludes the use of optical devices for magnification with the exception of corrective lenses needed for normal eyesight.)

The formed parts were trimmed using matched metal dies comprising hardened male and female die halves (American Iron and Steel Institute "AISI" Type A2 steel), with a clearance between the male die half and female die half of 10% of sheet thickness; wherein the part is at a 90 degree angle to the blade at the time of impact. Trimming the thermoformed part is an integral step in the IMD process. Multilayer structures with poor interlayer adhesion tend to delaminate during this step. A pass on this test is absence of any visible signs of cracking and any visible delamination during this step, with visibility determined with an unaided eye.

| Table 2 | | | | | | |
|---|---|---|---|---|---|---|
| No. | Total gage (mil) | Cap % | Cap layer Composition (percent by weight) | Surface Quality | Formability | Trimming |
| 1 | 7 | 30 | 90/10 DMBPC-PC/PCCD | Pass | Pass | Pass |
| 2 | 7 | 10 | 90/10 DMBPC-PC/PCCD | Pass | Pass | Pass |
| 3 | 7 | 30 | 80/20 DMBPC-PC/PCCD | Pass | Pass | Pass |
| 4 | 7 | 10 | 80/20 DMBPC-PC/PCCD | Pass | Pass | Pass |
| 5 | 7 | 10 | 60/40 DMBPC-PC/PCCD | Pass | Pass | Pass |
| 6 | 7 | 30 | 60/40 DMBPC-PC/PCCD | Pass | Pass | Pass |
| 7 | 10 | 20 | 85/15 DMBPC-PC/PCCD | Pass | Pass | Pass |
| 8 | 10 | 40 | 85/15 DMBPC-PC/PCCD | Pass | Pass | Pass |
| 9 | 10 | 40 | 75/25 DMBPC-PC/PCCD | Pass | Pass | Pass |
| 10 | 10 | 20 | 75/25 DMBPC-PC/PCCD | Pass | Pass | Pass |
| 11 | 15 | 30 | 90/10 DMBPC-PC/PCCD | Pass | Pass | Pass |
| 12 | 15 | 10 | 90/10 DMBPC-PC/PCCD | Pass | Pass | Pass |
| 13 | 15 | 10 | 80/20 DMBPC-PC/PCCD | Pass | Pass | Pass |
| 14 | 15 | 30 | 80/20 DMBPC-PC/PCCD | Pass | Pass | Pass |
| 15 | 15 | 30 | 60/40 DMBPC-PC/PCCD | Pass | Pass | Pass |
| 16 | 15 | 10 | 60/40 DMBPC-PC/PCCD | Pass | Pass | Pass |
| 17 | 10 | 20 | 100/0 DMBPC-PC/PCCD | Pass | Pass | Fail |
| 18 | 10 | 40 | 100/0 DMBPC-PC/PCCD | Pass | Pass | Fail |
| 19 | 10 | 30 | 85/15 DMBPC-PC/BPA-PC | Pass | Pass | Fail |
| 20 | 10 | 30 | 90/10 DMBPC-PC/BPA-PC | Pass | Pass | Fail |

| Table 3 | |
|---|---|
| Main Extruder diameter | 4.45 cm |
| Coextruder Diameter | 3.18 cm |
| Main Extrude End Zone Temp (°F) | 261° to 266°C |
| Coextruder End Zone Temp (°F) | 248° to 256°C |
| RPM (Main/Co-ex) | (33.3 to 44.2)/(25.7 to 40.5) |
| Die Temp (°F) | 266° to 272°C |
| Roll Temp (Top/Bottom) (°F) | (97° to 104°C)/(111°C to 121°C) |

As can be seen from Table 2, the DMBPC-PC/PCCD blends remain ductile all the way up to 90% DMBPC-PC composition. In contrast, blending DMBPC-PC with BPA-PC in proportion greater than 85% makes the film too brittle, hence unsuitable for IMD processing.

### Example 2

This example demonstrates hardness and scratch resistance of the multilayer film. Two samples were prepared in accordance with the film and resin composition set forth in Table 4. These samples were prepared the same way as those of Example 1.

| Table 4 | | | |
|---|---|---|---|
| No. | Total Gage (mil) | Cap % | Cap Layer Composition |
| 21 | 10 | 20 | 100/0 DMBPC-PC/PCCD |
| 22 | 10 | 20 | 85/15 DMBPC-PC/PCCD |
| 23 | 10 | 20 | 75/25 DMBPC-PC/PCCD |
| 24 | 10 | 20 | 60/40 DMBPC-PC/PCCD |

The two samples were compared to three commercially available samples for graphic applications: a 2 layer coextruded polycarbonate film The cap is a PC copolymer while the base is PC (specifically Lexan ML 9735 commercially available from SABIC Innovative Plastics, Pittsfield, MA) (Sample 25) (known as 1HD00, commercially available from SABIC Innovative Plastics); a monolayer polycarbonate (Sample 26) polycarbonate (Lexan 8010, commercially available from SABIC Innovative Plastics); and a coated polycarbonate film (Sample 27) comprising a curable silica coating on a base of polycarbonate (specifically Lexan 8010) (known as HP92S, commercially available from SABIC Innovative Plastics), all commercially available from SABIC Innovative Plastics. It must be noted that HP92S is a coated film which is not formable.

All samples were tested for hardness, namely pencil hardness according to ASTM D3363-05.

| Table 5 | | | |
|---|---|---|---|
| Sample No. | Pencil Hardness¹ (500 g) | Initial Haze² (%) | Taber Abrasion³ |
| 21 | 2H | 0.56 | 15.41 |
| 22 | 2H | 0.38 | 14.78 |
| 23 | H | 0.42 | 15.01 |
| 24 | F | 0.44 | 13.29 |
| 25 | H | 0.8 | 15.25 |
| 26 | 2B | 0.4 | 23.2 |
| 27 | B | 0.5 | 4.49 |

| | | | |
|---|---|---|---|
| ¹Pencil Hardness - according to ASTM D3363-05. ²Initial Haze - according to ASTM D1003-00, Procedure A measured, e.g., using a HAZE-GUARD DUAL from BYK-Gardner, using and integrating sphere (0°/diffuse geometry), wherein the spectral sensitivity conforms to the CIE standard spectral value under standard lamp D65. ³Taber Abrasion - delta Haze after 25 cycles, 100g wheel according to ASTM D1044-05. | | | |

Table 5 demonstrates that pencil hardness (ASTM D3363-05) as high as 2H can be achieved, which is a unit higher than the hardest formable film available. Higher DMBPC-PC content in the entire composite results in higher hardness. However, as mentioned earlier, a balance is needed between hardness and ductility for practical applications, which is achieved using the specified cap layer and overall film composition. Even blending DMBPC-PC down to 60 wt% results in hardness above hard coated polycarbonate films. However increasing the proportion of DMBPC-PC beyond 85 wt% doesn't result in any further improvement of the composite hardness. Preferred composition range is thus greater than 60 wt% and less than 85 wt%. The pencil hardness tests are subjective with significant standard deviation. In the following examples we present more quantitative measures of scratch resistance.

### Example 3

The samples were also tested for scratch resistance using an Erichsen Scratch Tester Type 413, which complies with ISO 1518. Forces of 2 Newtons (N) and 4N were applied to a conical stylus with radius if 0.01 millimeter (mm), which result in an indentation being made on the part surface. The extent of the indentation is subsequently measured by a Dektak 6M profilometer and is reported as the height of the indentation measured from the bottom of the indentation to the sample surface.

| Table 6 | | | |
|---|---|---|---|
| No. | Total Gage (mil) | Cap % | Cap Layer Composition |
| 1 | 7 | 30 | 90/10 DMBPC-PC/PCCD |
| 3 | 7 | 30 | 80/20 DMBPC-PC/PCCD |
| 6 | 7 | 30 | 60/40 DMBPC-PC/PCCD |

| Table 7 | | |
|---|---|---|
| Sample No. | Indentation (µm at 2N load) | Indentation (µm at 4N load) |
| 1 | 3.39 | 8.41 |
| 3 | 5.09 | 10.74 |
| 6 | 5.95 | 12.55 |
| 25 | 7.14 | 16.65 |
| 26 | 10.1 | 24.2 |
| 27 | 8.43 | 19.91 |

The data generated in (Tables 5 and 7) was generated under heavy loading. In yet another instance, micro-scratch tests (light loading) were performed with a Nano Indenter XP, MTS Systems, applying a normal load ramping from 0 to 50 milliNewtons (mN). The scratch velocity was 50 micrometers per second (µm/s). A standard Berkovich diamond indenter (with 10 nanometer (nm) radius tip) was used which was moved edge forward through the material. Figure 1 is an illustration of one such scratch and the corresponding measured cross profile showing the build-up around the scratch. Reported below are the instantaneous depth (depth during) of the profile at the point when the load reaches 25 milliNewtons (mN). This gives a measure of softness / hardness of the material. By the time the entire scratch is made (load reaches 50 mN), some of the disturbed material along the scratch has recovered, as a result of which the scratch depth reduces. The depth and width of the scratch is measured again at the same point as above; "depth after". This gives a measure of recovery ("forgiveness") of the material.

| Table 8 | | | | | | |
|---|---|---|---|---|---|---|
| | Sample 25 | Sample 26 | Sample 27 | Sample 1 | Sample 3 | Sample 6 |
| Width (µm) | 26.352 | 32.477 | 25.21 | 22.14 | 24.651 | 26.562 |
| Depth-during (nm) | 4167 | 4690 | 4925 | 3635 | 3990 | 4160 |
| Depth-after (nm) | 1320 | 1875 | 955 | 1080 | 1225 | 1330 |

As can be seen in Table 8, not only are Samples 1, 3, 6 significantly more resistant than both formable comparative samples (25 and 26), they are also comparable to the coated comparative sample HP92S (Sample 27). This is unexpected since one would have expected the coatings, by virtue of their cross-linking, to be much more resistant under such light loading.

### Example 4

In addition to scratch resistance and hardness, mechanical robustness is also a factor for IMD applications; e.g., the film should be resistant to cracks and tears. Resistance of the invention samples to crack was qualitatively demonstrated in Table 3. Table 9 reports the tear initiation and propagation strengths in Newtons per millimeter (N/mm) as measured using ASTM D1004-03 and D1938-02, respectively. It is evident from the Table 9 that the hardness gain demonstrated in previous examples did not compromise the tear resistance of the invention samples.

| Table 9 | | | | | | |
|---|---|---|---|---|---|---|
| | Sample 25 | Sample 26 | Sample 27 | Sample 1 | Sample 3 | Sample 6 |
| Tear Initiation Strength (N/mm) | 226.6 | 241.1 | 258.4 | 215.6 | 225.8 | 224.2 |
| Tear Propagation Strength (N/mm) | 10.0 | 9.2 | 10.5 | 10.7 | 11.8 | 12.4 |

As can be seen from the data in Table 9, the sheet had a tear initiation strength of greater than or equal to 120 N/mm, specifically, greater than or equal to 150 N/mm, more specifically, greater than or equal to 200 N/mm, yet more specifically, greater than or equal to 220 N/mm, and even greater than or equal to 230 N/mm. Furthermore, the tear propagation strength of the sheet was of greater than or equal to 5 N/mm, specifically, greater than or equal to 8 N/mm, more specifically, greater than or equal to 10 N/mm. As can be seen from the above, disclosed herein is a hard film that substantially retains its tear properties. It is further noted that a Sample comprising 2-layers, PMMA over PC film, with 50% cap layer, and an overall thickness of 7 mils, had a tear initiation of 95 N/mm despite having 4H hardness.

### Example 5

These films are also targeted for consumer home appliances and overlays which need to be resistant to common cleaning solutions. Table 10 demonstrates that in addition to the excellent scratch resistance, the sheets have good chemical resistance as well. Samples used in this example (same as those of Example 2) were exposed to the chemicals for 1 hour at 72°F and were evaluated for any signs of solvent attack such as crazing and/or staining. A rating of "pass" means no visual change in the surface was observed as is determined with an unaided eye.

| Table 10 | |
|---|---|
| Chemical | Results (Samples 21 - 24) |
| IPA (Isopropyl Rubbing Alcohol 99%) | Pass |
| Salt Water | Pass |
| Spray 'n Wash® Laundry stain remover | Pass |
| Concentrated Hydrochloric Acid (12%) | Pass |
| 40% NaOH | Pass |

## Claims

1. A sheet, comprising:
a cap layer comprising a combination of a bisphenol cyclohexylidene polycarbonate and a second polymer, where the second polymer comprises a cycloaliphatic polyester; and
a base layer comprising polycarbonate;
wherein the sheet is thermoformable.

2. The sheet of Claim 1, wherein the second polymer comprises 1,1-bis(4-hydroxy-3-methylphenyl)cyclohexane and poly(1,4-cyclohexane-dimethanol-1,4-dicarboxylate).

3. The sheet of Claim 1 or 2, wherein the amount of the second polymer is 10 to 50 wt%, with the remainder being bisphenol cyclohexylidene polycarbonate.

4. The sheet of Claim 1 or 3, wherein the cycloaliphatic polyester is a copolymer comprising at least 50 mole % cycloaliphatic residues, the remainder being the aromatic acid or C₁₋₄ alkylene glycol residues.

5. The sheet of Claim 4, wherein the cycloaliphatic polyester copolymers comprise at least 70 mole % cycloaliphatic residues.

6. The sheet of any of Claims 1 - 5, wherein bisphenol cyclohexylidene polycarbonate comprises dimethyl bisphenol cyclohexane polycarbonate.

7. The sheet of any of Claims 1 - 6, wherein the cap layer comprises 50 wt% to 90 wt% cycloaliphatic polyester.

8. The sheet of of any of Claims 1 - 7, comprising a pencil hardness greater than or equal to HB.

9. The sheet of any of Claims 1 - 8, comprising a tear initiation strength of greater than or equal to 120 N/mm.

10. The sheet of any of Claims 1 - 9, comprising a tear propagation strength of greater than or equal to 5 N/mm.

11. The sheet of any of Claims 1 - 10, wherein the sheet passes a formability test, wherein the formability test comprises preheating to 140°C 12 inches x 12 inches specimens of the sheet and then vacuum forming the preheated sheet on a COMET Thermoformer with the male forming tool at 120°C, a minimum curvature of 5 mm, and maximum draw of 10 mm, to produce a formed part.

12. The sheet of any of Claims 1 - 11, wherein the sheets pass a trimming test, wherein the trimming test comprises trimming the formed part using matched metal dies comprising a hardened male die half and a hardened female die half, with a clearance between the male die half and female die half of 10% of sheet thickness; wherein the part is at a 90 degree angle to the blade at the time of impact.

13. The sheet of Claim 1 or 2, wherein the second polymer comprises less than or equal to 90 wt% of a combination of 1,1-bis(4-hydroxy-3-methylphenyl)cyclohexane and polycarbonate, based upon a total weight of the second polymer.

14. The sheet of Claim 2, wherein the second polymer comprises 50 wt% to 90 wt% of a combination of 1,1-bis(4-hydroxy-3-methylphenyl)cyclohexane and polycarbonate, based upon a total weight of the second polymer.

15. A method for making an article, comprising:
melting a polycarbonate in an extruder;
forming a molten combination of a bisphenol cyclohexylidene polycarbonate and a cycloaliphatic polyester;
coextruding the molten combination and the polycarbonate to form a sheet,
wherein the polycarbonate forms a base layer and the molten combination forms a cap layer on the base layer.

## Patentansprüche

1. Flachmaterial, umfassend:
eine Decklage, umfassend eine Kombination von einem Bisphenolcyclohexylidenpolycarbonat und einem zweiten Polymer, wobei das zweite Polymer einen cycloaliphatischen Polyester umfasst; und
eine Basislage, welche Polycarbonat umfasst;
wobei das Flachmaterial thermoformbar ist.

2. Flachmaterial nach Anspruch 1, wobei das zweite Polymer 1,1-Bis-(4-hydroxy-3-methylphenyl)-cyclohexan und Poly-(1,4-cyclohexandimethanol-1,4-dicarboxylat) umfasst.

3. Flachmaterial nach Anspruch 1 oder 2, wobei der Anteil des zweiten Polymers 10 bis 50 Gew.% beträgt und der Rest Bisphenolcyclohexylidenpolycarbonat ist.

4. Flachmaterial nach Anspruch 1 oder 3, wobei der cycloaliphatische Polyester ein Copolymer ist, welches mindestens 50 mol% an cycloaliphatischen Resten umfasst, wobei der Rest die aromatische Säure oder C₁₋₄-Alkylenglycol-Reste ist bzw. sind.

5. Flachmaterial nach Anspruch 4, wobei die cycloaliphatischen Polyester-Copolymere mindestens 70 mol% an cycloaliphatischen Resten umfassen.

6. Flachmaterial nach einem der Ansprüche 1 bis 5, wobei das Bisphenolcyclohexylidenpolycarbonat Dimethylbisphenolcyclohexanpolycarbonat umfasst.

7. Flachmaterial nach einem der Ansprüche 1 bis 6, wobei die Decklage 50 Gew.% bis 90 Gew.% an cycloaliphatischem Polyester umfasst.

8. Flachmaterial nach einem der Ansprüche 1 bis 7, umfassend eine Bleistifthärte größer oder gleich HB.

9. Flachmaterial nach einem der Ansprüche 1 bis 8, umfassend eine Einreißfestigkeit größer oder gleich 120 N/mm.

10. Flachmaterial nach einem der Ansprüche 1 bis 9, umfassend eine Weiterreißfestigkeit größer oder gleich 5 N/mm.

11. Flachmaterial nach einem der Ansprüche 1 bis 10, wobei das Flachmaterial einen Formbarkeitstest besteht, wobei der Formbarkeitstest umfasst: Vorwärmen von 12-Zoll-x-12-Zoll-Probekörpern des Flachmaterials auf 140 °C, gefolgt von Vakuumformen des vorgewärmten Flachmaterials auf einem COMET-Thermoformer, mit dem männlichen Formwerkzeug bei 120 °C, einer minimalen Krümmung von 5 mm und einer maximalen Verstreckung von 10 mm, um ein Formteil zu erzeugen.

12. Flachmaterial nach einem der Ansprüche 1 bis 11, wobei die Flachmaterialien einen Beschneidungstest bestehen, wobei der Beschneidungstest umfasst: Beschneiden des Formteils unter Verwendung von zusammenpassenden Metallwerkzeugen, umfassend eine gehärtete männliche Werkzeughälfte und eine gehärtete weibliche Werkzeughälfte, mit einem Abstand zwischen der männlichen Werkzeughälfte und der weiblichen Werkzeughälfte von 10 % der Flachmaterialdicke; wobei das Teil in einem 90-Grad-Winkel zu der Schneide beim Auftreffen steht.

13. Flachmaterial nach Anspruch 1 oder 2, wobei das zweite Polymer weniger oder gleich 90 Gew.% einer Kombination von 1,1-Bis-(4-hydroxy-3-methylphenyl)-cyclohexan und Polycarbonat umfasst, basierend auf einem Gesamtgewicht des zweiten Polymers.

14. Flachmaterial nach Anspruch 2, wobei das zweite Polymer 50 Gew.% bis 90 Gew.% einer Kombination von 1,1-Bis-(4-hydroxy-3-methylphenyl)-cyclohexan und Polycarbonat umfasst, basierend auf einem Gesamtgewicht des zweiten Polymers.

15. Verfahren zur Herstellung eines Artikels, umfassend:
Schmelzen eines Polycarbonats in einem Extruder;
Bilden einer Schmelzkombination von einem Bisphenolcyclohexylidenpolycarbonat und einem cycloaliphatischen Polyester;
Coextrudieren der Schmelzkombination und des Polycarbonats, um ein Flachmaterial zu bilden, wobei das Polycarbonat eine Basislage bildet und die Schmelzkombination eine Decklage auf der Basislage bildet.

## Revendications

1. Une feuille, comprenant:
- une couche de recouvrement comprenant une combinaison d'un polycarbonate de bisphénol cyclohexylidène et d'un second polymère, le second polymère comprenant un polyester cycloaliphatique, et
- une couche de base comprenant un polycarbonate ;
dans laquelle la feuille est thermoformable.

2. La feuille selon la revendication 1, dans laquelle le second polymère comprend du 1,1-bis(4-hydroxy-3-méthylphényl)-cyclohexane et du poly(1,4-cyclohexane-diméthanol-1,4-dicarboxylate).

3. La feuille selon la revendication 1 ou 2, dans laquelle la quantité du second polymère est de 10 à 50% en poids, le reste étant du polycarbonate de bisphénol cyclohexylidène.

4. La feuille selon la revendication 1 ou 3, dans laquelle le polyester cycloaliphatique est un copolymère comprenant au moins 50% en moles de résidus cycloaliphatiques, le reste étant de l'acide aromatique ou des résidus de C₁₋₄-alkylene glycols.

5. La feuille selon la revendication 4, dans laquelle les copolymères de polyester cycloaliphatique comprennent au moins 70% en moles de résidus cycloaliphatiques.

6. La feuille selon l'une des revendications 1-5, dans laquelle le polycarbonate de bisphénol cyclohexylidène comprend du polycarbonate de diméthyl bisphénol cyclohexane.

7. La feuille selon l'une des revendications 1-6, dans laquelle la couche de recouvrement comprend de 50% à 90% en poids de polyester cycloaliphatique.

8. La feuille selon l'une des revendications 1-7, présentant une dureté au crayon supérieure ou égale à HB.

9. La feuille selon l'une des revendications 1-8, comprenant une résistance d'amorce de déchirure supérieure ou égale à 120 N/mm.

10. La feuille selon l'une des revendications 1-9, comprenant une résistance à la propagation de la déchirure supérieure ou égale à 5 N/mm.

11. La feuille selon l'une des revendications 1-10, cette feuille subissant un test d'aptitude au formage, lequel test d'aptitude au formage comprenant le préchauffage à 140°C d'échantillons de la feuille de 12 pouces x 12 pouces, puis le formage sous vide de la feuille préchauffée sur un appareil de thermoformage COMET dont l'outil de formage mâle est à 120°C, la courbure est d'au moins 5 mm et l'étirage maximum est de 10 mm, pour produire une pièce façonnée.

12. La feuille selon l'une des revendications 1-11, dans laquelle les feuilles passent un test de calibrage, lequel test de calibrage comprend le calibrage de la partie façonnée à l'aide de matrices métalliques adaptées comprenant une moitié d'une matrice mâle durcie et une moitié de matrice femelle durcie, les deux moitiés de matrice présentant entre elles un jeu de l'ordre de 10% de l'épaisseur de la feuille ; dans laquelle ladite partie forme, au moment de l'impact, un angle de 90 degrés par rapport à la lame.

13. La feuille selon la revendication 1 ou 2, dans laquelle le second polymère comprend une teneur inférieure ou égale à 90% en poids d'une combinaison de 1,1-bis(4-hydroxy-3-méthyl-phényl)-cyclohexane et de polycarbonate, par rapport au poids total du second polymère.

14. La feuille selon la revendication 2, dans laquelle le deuxième polymère comprend de 50 à 90% en poids d'une combinaison de 1,1-bis(4-hydroxy-3-méthyl-phényl)-cyclohexane et de polycarbonate, par rapport au poids total du second polymère.

15. Un procédé de fabrication d'un article, comprenant :
- la fusion d'un polycarbonate dans une machine à extrusion ;
- la formation d'une combinaison fondue d'un polycarbonate de bisphénol cyclohexylidène et d'un polyester cycloaliphatique ;
- la coextrusion de la combinaison fondue et du polycarbonate pour former une feuille,
dans lequel le polycarbonate forme une couche de base et la combinaison fondue forme une couche de recouvrement sur la couche de base.
